(19)

Europäisches Patentamt
European Patent Office
Office européen des brevets

(11) **EP 2 498 501 A2**

(12) **EUROPEAN PATENT APPLICATION**

(43) Date of publication:
**12.09.2012 Bulletin 2012/37**

(51) Int Cl.:
*H04N 13/00* *(2006.01)*    *H04N 13/04* *(2006.01)*

(21) Application number: **11185359.4**

(22) Date of filing: **17.10.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **07.03.2011 KR 20110019967**

(71) Applicant: **Samsung Electronics Co., Ltd.**
**Suwon-si, Gyeonggi-do 442-742 (KR)**

(72) Inventors:
• **Kwon, Oh-jae**
**Gyeonggi-do (KR)**

• **Zhang, Lei**
**Gyeonggi-do (KR)**
• **Min, Kyung-sun**
**Gyeonggi-do (KR)**
• **Min, Jong-sul**
**Gyeonggi-do (KR)**
• **Sohn, Young-wook**
**Gyeonggi-do (KR)**

(74) Representative: **Davies, Robert Ean**
**Appleyard Lees**
**15 Clare Road**
**Halifax**
**Yorkshire HX1 2HY (GB)**

(54) **3D image display method and apparatus thereof**

(57)    An image display apparatus and method are provided. The image display apparatus includes receiving an image comprising a left-eye image and a right-eye image, determining at least one distortion parameter from the left-eye image and the right-eye image; converting the received left-eye image and right-eye image by removing a first boundary part from the received left-eye image and removing a second boundary part from the received right-eye image based on the at least one determined distortion parameter; and alternately displaying the converted left-eye image and right-eye image

FIG. 3

EP 2 498 501 A2

**Description**

CROSS-REFERENCE TO RELATED APPLICATION

This application claims priority from Korean Patent Application No. 10-2011-0019967, filed March 7, 2011, in the Korean Intellectual Property Office, the disclosure of which is incorporated herein by reference in its entirety.

BACKGROUND

**1. Field**

Apparatuses and methods consistent with the exemplary embodiments relate to image display. More specifically, to a method and an apparatus for displaying a 3D image.

**2. Description of the Related Art**

Techniques for generating a 3D image include a method for creating a 3D illusion from a pair of 2D images. A users eyes are spaced apart from each other, and each eye recognizes a slightly different image. Hence, since the eyes receive image information of different depths with respect to the same object, the 3D image can be recognized from the pair of 2D images. Naturally, the difference of the depth is the same as the depth perception received in binocular vision. A human brain can process this difference and the depth, and the human can recognize the depth from the two different 2D images.

In a 3D image system, a cross frame sequence system can use two different cameras to capture a left-eye image and a right-eye image. The captured left-eye and right-eye images can be displayed to a viewer who is wearing shutter glasses, which alternately open and close a left-eye shutter and a right-eye shutter in rapid succession so that the viewer can experience the binocular vision. As stated above, the brain of the viewer can recognize the depth based on the slight difference between the perceived left-eye and right-eye images, and the viewer can perceive the 3D image based on the left-eye 2D image and the right-eye 2D image.

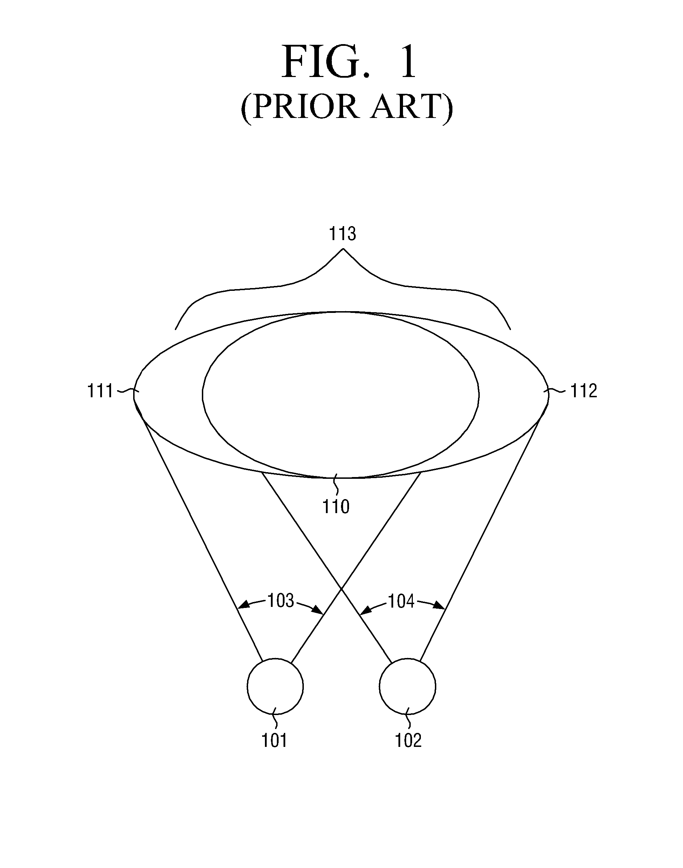

FIG. 1 depicts the perception of the screen/object in both of a human's eyes. As shown in FIG. 1, eye 101 and eye 102 have respective visual angle ranges 103 and 104. The viewer watches a scene 113 including areas 110, 111, and 112: According to the limited visual angle range of each individual eye, each eye perceives a different image of the scene 113. The left eye 101 perceives the areas 110 and 111, whereas the right eye 102 perceives the areas 110 and 112. The left eye 101 cannot see the area 112 because its visual angle range 103 is limited. Conversely, the right eye 102 cannot see the area 111 because its visual angle range 104 is limited. The visual angle ranges 103 and 104 are partially overlapped, and the viewer can perceive the depth of the scene 113 in the area 110 which is a part of the scene 113. The depth perception of the viewer results from the slight difference perceived between the left-eye image and the right-eye image. While FIG. 1 depicts the illusion of tdepth in the pair of the eyes, this can be applied to a 3D image system including a pair of cameras to capture images in a same model.

However, there can be a great difference between the left-eye image and the right-eye image which is received. Referring back to FIG. 1, the left-eye 101 cannot recognize the area 112 and the right-eye 102 cannot recognize the area 111. In this case, some elements can exist in the left-eye image and not in the right-eye image, or vice versa. As shown in FIG. 1, a difference can take place in each boundary of the left-eye image and the right-eye image. When the differences are shown to the viewer, errors or artifacts occur. If such a 3D image displayed, the viewer cannot perceive the depth in the different parts (e.g., the areas 111 and 112 in FIG. 1) in the left-eye image and the right-eye image. Also, the viewer can experience discomfort because of the difference between the left-eye image and the right-eye image. The artifacts may take place in other parts of the images as well. For example, the artifacts may take place in an area where some elements exist in one image and no element exists in other areas (e.g., the area 110 of FIG. 1). The artifacts can occur in the area where the depth difference between the left-eye and right-eye images are greater than a preset value. These type differences result from the image artifacts which can cause uneasiness to the viewer. Due to the artifacts, for example, the viewer can experience errors in their perception of the 3D image (e.g., the errors can be caused by the alternating display of the left-eye and right-eye 2D images). In addition, the viewer can feel a phenomena such as flickering, crosstalk, and ghosting in the displayed 3D image. These phenomena lead to discomfort and eye fatigue for the viewer. Accordingly, it is necessary to minimize or eliminate the side effects.

Further, when the received image includes pillarbox using black bars on the left and right sides of a particular display format image, or letterboxes using black bars on the top and bottom sides of a particular display format image, the above-stated problems are more noticeable because of the different parts of the left-eye and right-eye images. For instance, the pillarbox itself can be deformed. In addition, spatial crosstalk and temporal flickering can take place. These side effects can occur in a letterboxed video signal format. Therefore, it is necessary to minimize or eliminate the side effects.

SUMMARY

Exemplary embodiments of the present disclosure address the above disadvantages and other disadvantages not described above. Also, the exemplary embodiments are not required to overcome the disadvantages described above, and an exemplary embodiment of the present disclosure may not overcome any of the problems described above.
According to the present invention there is provided an apparatus and method as set forth in the appendad claims: Other features of the invention will be apparent from the dependent claims, and the description which follows.
An exemplary embodiment provides an image display method and apparatus for reducing artifacts.
An image display method includes receiving an image which includes a left-eye image and a right-eye image, determining at least one distortion parameter from the left-eye image and the right-eye image; converting the received left-eye image and the received right-eye image by removing a first boundary part from the received left-eye image and removing a second boundary part from the received right-eye image based on the at least one determined distortion parameter; and alternately displaying the converted left-eye image and the converted right-eye image.
The image display method may further include, if the received image is a 2D image including at least one of a pillarbox and a fetterbox, removing the pillarbox or letterbox and generating a second left-eye image and a second right-eye image.
The determining of the distortion parameter may include determining a maximum disparity value between the received left-eye and right-eye images.
The distortion parameter may include coordinates corresponding to a left part and a right part, wherein the left part may be a left edge of the received left-eye image, and wherein the right part may be a right edge of the received right-eye image.
The first and second boundary parts may be in a vertical direction.
The image display method may further include scaling the converted left-eye image and the converted right-eye image.
The scaling may be performed according to a scaling ratio defined based on the at least one distortion parameter.
The image display method may further include inserting black bars to areas corresponding to the boundary parts removed in the left-eye image and the right-eye image.
The received left-eye image and the received right-eye image may include at least one of a pillarbox and a letterbox.
The determining the at least one distortion parameter may include determining at least one of a size of the pillarbox area and a size of the letterbox area.
The determining the at least one distortion parameter may include determining a size of a pillarbox area; determining a maximum disparity value between the received left-eye image and right-eye image; and wherein if the size of the pillarbox area is greater than the maximum disparity value, determining the pillarbox area as the first and second boundary parts.
The first boundary part may be similar to at least one of a size, a shape, and a location of the second boundary part.
An image display apparatus includes an input unit which receives an image including a left-eye image and a right-eye image; a distortion determination unit which determines at least one distortion parameter from the left-eye image and the right-eye image; an image conversion unit which converts the received left-eye image and right-eye image by removing a first boundary part from the received left-eye image and removing a second boundary part from the received right-eye image based on the at least one determined distortion parameter; and a display unit which alternately displays the converted left-eye image and the converted right-eye image.
if the received image is a 2D image including at least one of a pillarbox and a letterbox, the image conversion unit may remove the pillarbox or letterbox and then generate the left-eye image and the right-eye image.
The distortion determination unit may determine a maximum disparity value between the received left-eye and right-eye images.
The at least one distortion parameter may include coordinates corresponding to a left part and a right part, the left art may be a left edge of the received left-eye image, and the right part may be a right edge of the received right-eye image.
The first and second boundary parts may be in a vertical direction.
The image display apparatus may further include a scaling unit which scales the converted left-eye and right-eye images.
The scaling unit may the converted left-eye and right-eye images according to a scaling ratio defined based on the at least one distortion parameter.
The image conversion unit may insert black bars to corresponding to the boundary parts removed in the left-eye and right-eye images.

The left-eye and right-eye images may include at least one of a pillarbox and a letterbox.

The distortion determination unit may determine at least one of a size of the pillarbox area and a size of the letterbox area.

The distortion determination unit may determine a size of the pillarbox area, determine a maximum disparity value between the received left-eye and right-eye images, and determine the pillarbox area as the first and second boundary parts if the size of the pillarbox area is greater than the maximum disparity value.

The first boundary part may be similar to at least one of a size, a shape, and a location of the second boundary part.

The received left-eye image and the received right-eye image may include at least one of a pillarbox and a letterbox, wherein the at least one distortion parameter may include first data relating to different pixels by a preset value between the received left-eye and right-eye images, and second data relating to one or more internal pixels of the pillarbox and the letterbox, and wherein the first and second boundary parts may be determined based on comparison of the first data and the second data.

BRIEF DESCRIPTION OF THE DRAWINGS

For a better understanding of the invention, and to show how embodiments of the same may be carried into effect, reference will now be made, by way of example, to the accompanying diagrammatic drawings in which:

FIG. 1 is a diagram of a binocular vision system;
FIG. 2 is a diagram of a disparity calculation;
FIG. 3 is a flowchart of a method for enhancing a 3D display image quality according to an exemplary embodiment;
FIGS. 4A and 4B are diagrams of left-eye images, right-eye images, and boundary areas;
FIG. 5 is a diagram of pillarboxed left-eye image and a pillarboxed right-eye image;
FIGS. 6A, 6B, and 7 are diagrams of maximum disparity;
FIGS. 8A, 8B and 9 are diagrams of a boundary area; and
FIG. 10 is a block diagram of a 3D image display apparatus according to an exemplary embodiment.

DETAILED DESCRIPTION OF EXEMPLARY EMBODIMENTS

Exemplary embodiments are described in greater detail below with reference to the accompanying drawings,

In the following description, like drawing reference numerals are used for the like elements, even in different drawings. The matters defined in the description, such as detailed construction and elements, are provided to assist in a comprehensive understanding of the exemplary embodiments. However, the exemplary embodiments can be practiced without those specifically defined matters. Also, well-known functions or constructions are not described in detail since they would obscure the exemplary embodiments with unnecessary detail.

Most of the disparity in received contents typically exist in particular parts of a left-eye image and a right-eye image, In most cases, a maximum disparity lies inside a boundary line of each image. To correct or reduce artifacts during the 3D image display, distortion parameters can be determined to identify target boundary areas within the left-eye and right-eye images. The distortion parameters can be eventually applied to a target artifact reduction process for reducing or eliminating the artifacts in the 3D image.

The term "distortion parameters" typically indicates a set of parameters used to measure the most appropriate boundary location and size for each of the left-eye and right-eye images. For example, the distortion parameters can include information which specifies the boundary areas such as size, shape, and location of the analyzed image. As such, the distortion parameters are determined, and the boundary areas of the left-eye and right-eye images can be specified to focus on the artifact reduction and elimination.

The distortion parameters can include information relating to a point and an area of the disparity between the left-eye and right-eye images (e.g., locations of possible image artifacts), a location and a size of the pillarbox or the letterbox, edge points of the left-eye and right-eye images, and a boundary area location and size. The edge points can be outermost edges of the left-eye and right-eye images. That is, the edge points can be uppermost, lowermost, leftmost, and rightmost outer boundary lines which define the outer edges of the images.

For example, based on the method for determining the distortion parameters, the artifact of the greatest concentration or the greatest value can be determined to be positioned in the center region of the image, In this situation, the boundary can be located toward the center of the image. Depending on attributes of the considered distortion parameters, it is not necessary that the area including the artifacts to be reduced or eliminated be substantially the point or the area around the edge of the image. In other words, the term "boundary area" is not limited to the area around the physical edge of the analyzed image.

In addition, the boundary area is substantially rectangular in the drawings. However, the shape of the boundary area is not limited to a rectangle and a boundary area can employ any shape in every area of the received and analyzed image.

As stated above, one possible distortion parameter includes a location of a maximum disparity value between the left-eye and right-eye 2D images. A method for determining the maximum disparity value includes calculating a disparity vector which is a distance between a reference pixel (or area) and an estimation pixel (or area) by estimating most similar pixels (or area) to pixels (or the area) of the left-eye image, in the right-eye image, and locating the point of the maximum disparity vector value. The maximum disparity value can simply indicate, for example, a single point, such as coordinates in the image, or a plurality of points, such as area in the image.

More broadly, the term "disparity value" can include a value indicating a particular area in the image. For example, the image can be logically segmented according to predefined segmentation schemes, and the maximum disparity value can be simply represented as an identifier for one of the segments. For example, a screen can be divided into quadrants, and the area of the maximum disparity can lie in a particular quadrant. In this case, the determination of the boundary area can correspond to an identifier indicating the area of the greatest disparity between the left-eye image and the right-eye image.

The points or areas of the disparity can be compared with, for example, points or areas defining the edge of the image so as to fix the sole location of the disparity point or area. For example, when the edge point is determined as the location (0, 0) in the left-eye image, a disparity vector of the maximum disparity between the left-eye image and the right-eye image can be represented, for example, as the sole location of the coordinates (0, 1) with respect to the location of the edge point. In this example, the disparity value can be 1 and the distance, for example, between the point (0, 0) and the (0, 1). This applies to the areas opposite to the single point coordinates based on the maximum disparity value determination between the left-eye and right-eye images.

In any case, the determination of the distortion parameters includes the point or area coordinate information, and can include determining the disparity value between the left-eye and right-eye images and edge point or area information for the analyzed images. Yet, the exemplary embodiments are not limited to particular implementations, In general, quantitative values for the disparity point(s) and the edge point(s) are enough to provide active information to indicate a target boundary area, and can be used to reduce the artifacts.

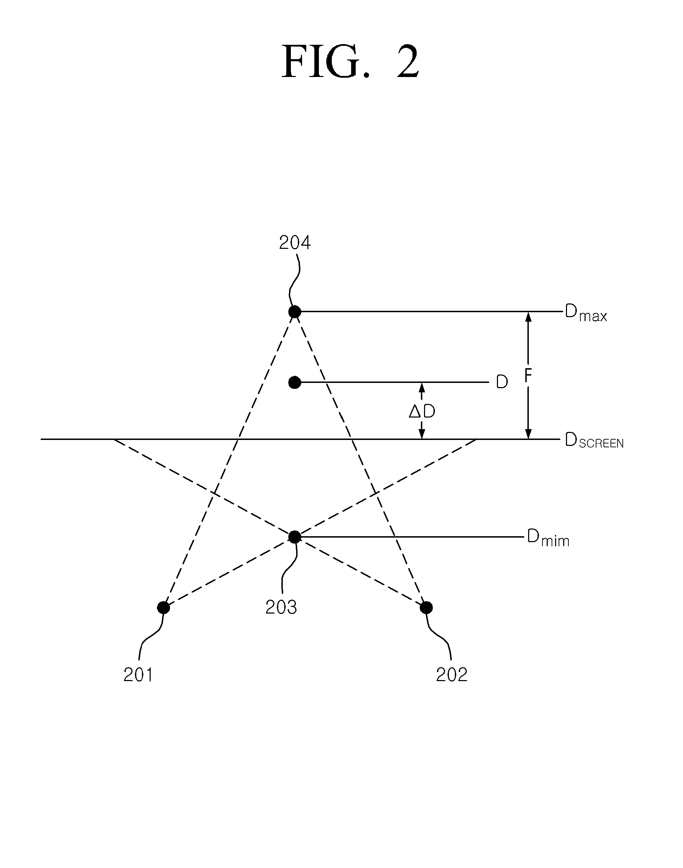

Another method for determining the maximum disparity value relates to depth rendering of the received 2D image. For example, when the left-eye and right-eye images are received, the depth can be measured using various schemes, One of the various schemes can include calculating the disparity and/or measuring a movement direction of each pixel, which is shown in FiG. 2.

FIG. 2 depicts a left eye 201 and a right eye 202 facing a screen. In FIG. 2, two virtual objects represent a farthest object 204 and a closest object 203 according to the perception of the viewer. Corresponding depths can be expressed as Dmin and Dmax respectively. Dmin can be given the smallest value (e.g., 0), and Dmax can be given the greatest value (e.g., 255). A virtual object D can be positioned between Dmax and min, and Dmin <= D <= Dmax. The virtual object D can be positioned at the distance by $\Delta D$. Another parameter F indicates a focal distance based on the locations of the left eye 201 and the right eye 202. A location of the screen can be represented as the depth Dscreen. Hence, the focal distance F can be expressed as F=Dscreen-Dmin. Next, the disparity value can be calculated for each pixel based on Equation 1.

[Equation 1]

$$Disparity = k(\Delta D) = k(D - F)$$

$k$ is a relation parameter which involves the screen width D and focal distance F. $k$ can be a random value, for example, a preset value of 2.5%.

In Equation 1, when D < F, the disparity value is negative and can be analyzed as the pixel moving inversely. Pixels can move to the left or to the right. As such, the disparity value can explain the shifting. However, as mentioned above, the disparity can account for other differences between the pixels in the left-eye and right-eye images. For example, one pixel can exist in one image and not in other images, and the pixels can have different values in the given image frame.

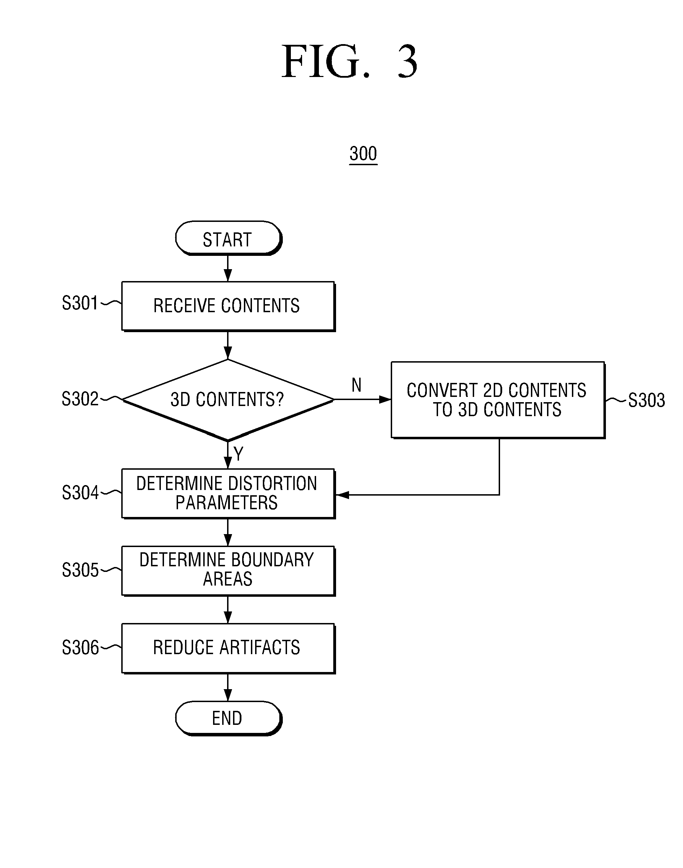

FIG. 3 is a flowchart of a 3D image display method 300 according to an exemplary embodiment.

As shown in FIG. 3, the method receives contents (S301). 2D contents or 3D contents can be received as the input contents.

Next, the method determines whether the received contents are the 3D contents (S302). When the received contents are the 2D contents, rather than the 3D contents, the method converts the 2D contents to 3D contents using various 2D/3D conversion schemes (S303). When the 2D contents include the pillarboxes or the letterboxes, the method can remove the box areas and then convert the 2D contents to the 3D contents, The 3D image can include the left-eye image and the right-eye image,

When the received contents are the 3D contents, the distortion parameters such as boundary artifacts can be determined in the left-eye and right-eye images (S304). When the distortion parameters are known, the boundaries can be determined for the left-eye and right-eye images. As aforementioned, the determination of the distortion parameters can include determining of the boundary areas (S305). Alternatively, the determination of the boundary areas can be part of separately performed operations. For example, the determining the boundary areas can be carried out separately from the determining of the other distortion parameters such as maximum disparity information, pillarbox information, and edge information. When confirming the boundary areas in the left-eye and right-eye images, the method can reduce or eliminate the artifacts (5306).

Although the determining of the distortion parameters (S304) and the determining of the boundary areas (S305) are in FIG. 3, the exemplary embodiments are not limited to those separated steps, Instead, the distortion parameters and the boundary cay be determined in the same step. Further, the distortion parameters are not limited to the coordinates which define the boundary areas of a preset size and/or location. As such, the exemplary embodiments are not limited to the implementation of FIG. 3.

Although it is not illustrated in Fig. 3, black corresponding to the removed boundary parts in the left-eye and right-eye images can be inserted.

Further, additional can be added to the method of FIG. 3 to determine whether the received contents include a pillarboxed video signal.

As described above, by determining the distortion parameters, the boundary for the left-eye and right-eye images can be measured. For example, the size of the boundary of one image which is the left-eye image can be set to the same size (e.g., $B_L = B_R$) as another image which is the right-eye image. In other words, a general preset boundary size be used for the boundaries of the left-eye and right-eye images. In this simple example, the distortion parameters can include boundary location/size information.

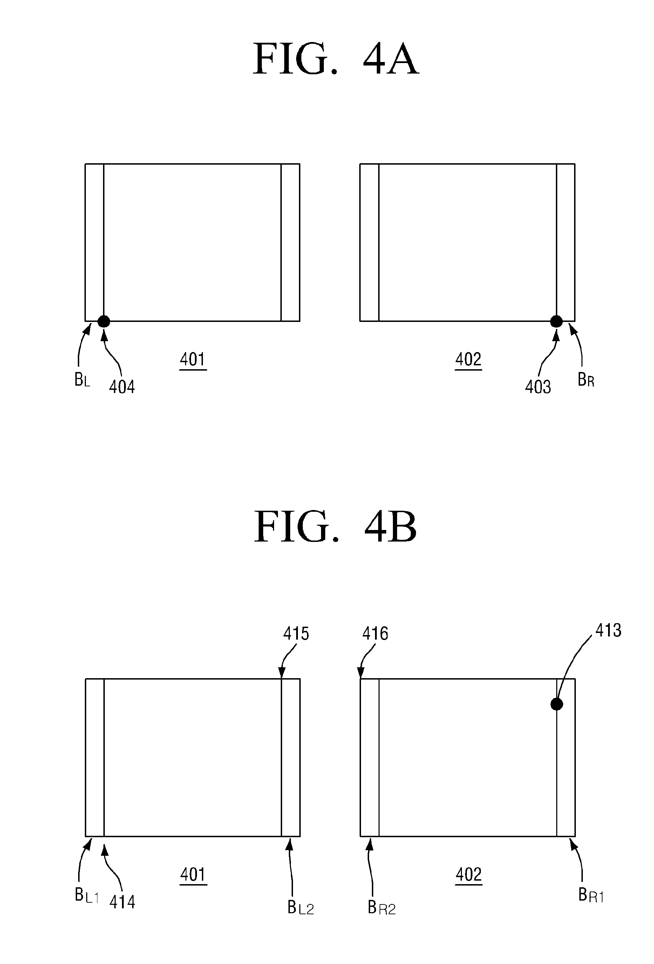

For example, the term $B_L$ denotes the boundary of the left-eye image and $B_R$ denotes the boundary of the right-eye image. FIG. 4A depicts the left-eye image 401, the right-eye image 402, and the boundary areas $B_L$ and $B_R$ The size of each boundary can be set to the same value of the maximum disparity between the left-eye and right-eye images ($B_L = B_R = Max(D)$) That is, both boundaries can be set to the same as the maximum disparity value Max(D) between the left-eye and right-eye images.

For example, when the maximum disparity occurs at a point 403 between the left-eye image 401 and the right-eye image 402, the edge of the boundary $B_R$ can be fixed to one point in the right-eye image 402. Similarly, the boundary $B_L$ can be fixed to the equivalent point 404 in the left-eye image 401. Herein, the distortion parameters can include the maximum disparity value between the left-eye and right-eye images.

Both of the left-eye and right-eye images have the left-eye and right-eye boundaries. In some the boundary are in the left and right sides in all of the left-eye and right-eye images. This is because the artifacts can occur in those four areas. When the artifacts are determined to be in all of the four boundary areas, the artifact reduction/elimination can be equally applied to the left and right boundaries of both of the left-eye and right-eye images. FIG. 4B the four boundary areas in the left-eye and right-eye images. In the left-eye image, the ieft-eye boundary $B_{L1}$ and the right-eye boundary $B_{L2}$ can be the same as the boundaries $B_{R1} B_{R2}$ of the right-eye image. Namely, $B_{L1} = B_{L2} = B_{R1} = B_{R2}$. when one boundary is set, the other three boundaries can be set to be the same. In this example, the distortion can include not only the preset boundary information but also the maximum disparity value between the left-eye and right-eye images.

As in FiG.4A.the four boundaries $B_{L1}, B_{L2}, B_{R1}$ and $B_{R2}$ of FIG. 4B can be set to the same as the maximum disparity between the left-eye image 401 and the right-eye image 402 based on Equation 2.

[Equation 2]

$$B_{L1} = B_{R1} = B_{L2} = B_{R2} = Max(D)$$

When the maximum disparity between the left-eye image 401 and the right-eye image 402 occurs at a point 413, the edge of the boundary $B_{R1}$ can be fixed to one point in the right-eye image 402. Similarly, the boundaries $B_{L1}, B_{L2}$, and $B_{R2}$ can be fixed to equivalent points (points 414 and 415 in the left-eye image 401 and a point 416 in the right-eye image 402).

As such, in the pillarboxed video signal, the difference between the left-eye and right-eye images can make the pillarboxes distort the final stereoscopic image. When the pillarboxed input video signal is received, the determining of the boundary can take some other approaches. In this case, the distortion parameters can include all or some of the above-described embodiments to the pillarbox size/locafion information,

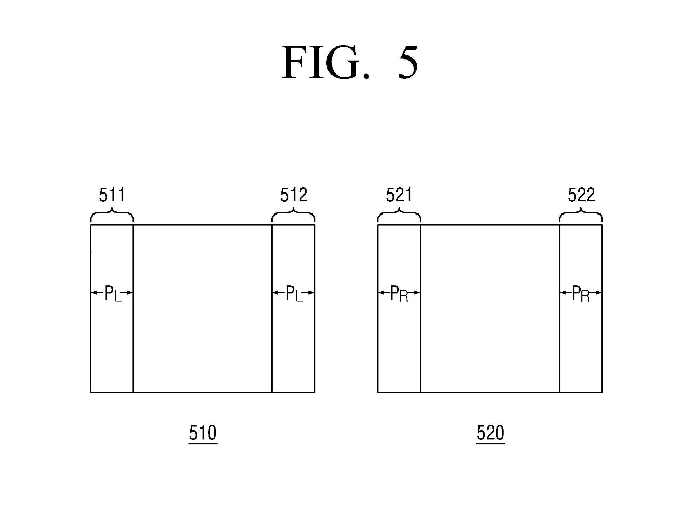

FIG. 5 is a diagram of pillarboxed left-eye and right-eye images, As shown in FIG. 5, a left-eye image 510 can include pillarbox areas 511 and 512. Similarly, a right-eye image 520 can include pillarbox areas 521 and 522. The pillarbox areas 511 and 512 in the left-eye image 510 can be expressed as $PL$. Likewise, the pillarbox areas 521 and 522 in the right-eye image 520 can be expressed as $P_R$. It is assumed that all of the pillarbox areas 511 and 512 of the left-eye image 510 have the same size $P_L$. It is assumed that all of the pillarbox areas 521 and 522 of the right-eye image 520 have the same size $P_R$.

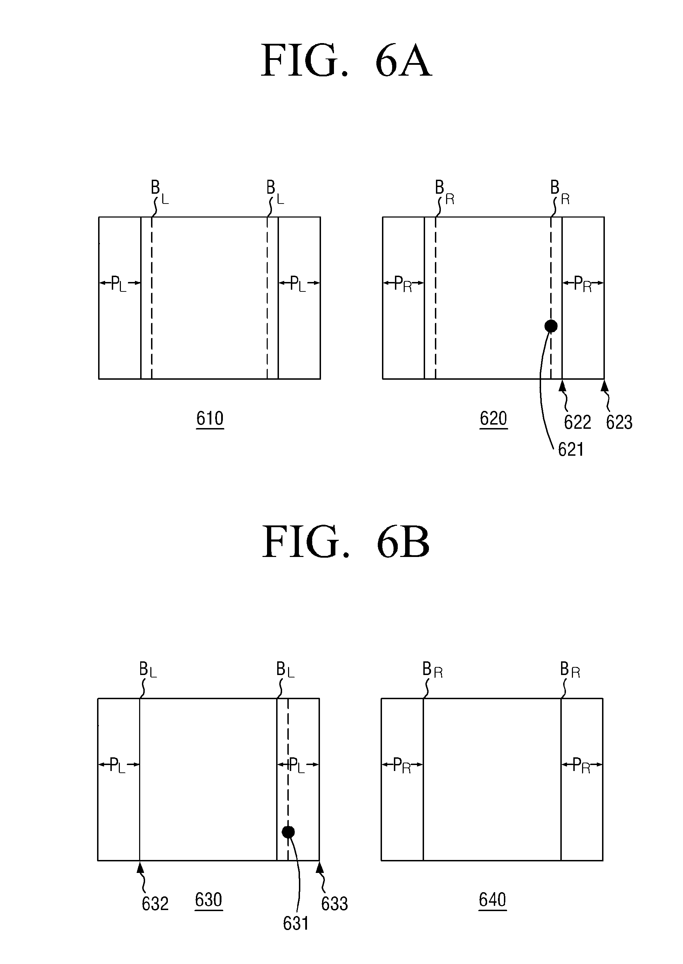

As shown in Fig. 6, the boundary area $B_L$ in he left-eye image and the boundary area $B_R$ in the right-eye image are given by Equation 3.

[Equation 3]

$$B_L = B_R = \begin{cases} Max(D), \text{if } Max(P_L, P_R) < Max(D) \\ Max(P_L, P_R), \text{otherwise} \end{cases}$$

$P_l$ and $P_R$ denote the sizes of the pillarbox areas in the left-eye and right-eye images, respectively, and Max (D) denotes the maximum disparity value between the lefl-eye and right-eye images,

That is, when the maximum size of the left-eye pillar box area $P_L$ and the right-eye pillarbox area $P_R$ is smaller than the of the area defined by the maximum disparity point, the point of the maximum disparity the boundary for the left-eye and right-eye images. By contrast, when the maximum of the left-eye and right-eye pillarbox areas is greater than the size of the area defined by the maximum disparity point, the maximum size of the left-eye and right-eye pillarbox areas defines the boundary for the left-eye and right-eye images, which are shown in FIGS. 6A and 6B,

FIG. 6A illustrates a left-eye image 610 and a right-eye image 620. FIG. 6B illustrates a left-eye image 630 and a right-eye image 640. As shown in FIG. 6A, provided that the point of the maximum disparity is a point 621 , for provided that the point of the maximum value between the left-eye and right-eye pillarboxes $P_L$ and $P_R$ is a point 622, the point 621 is used to define the boundary areas $B_R$ in the right-eye image because the point 621 is greater than the point 622 defining the edge of the pillarbox (e.g., because the point 621 is farther from the edge point 623 of the image). Similarly, the boundary areas $B_l$ for the lefl-eye image can be determined based on the location of the point 622.

By contrast, FIG. 6B depicts the left-eye and right-eye images including the pillarbox areas $P_l$ and $P_R$. The maximum disparity point is a point 631 and smaller than a point 632 indicating the maximum size of the pillarbox areas $P_L$ and $P_R$ (e.g., closer than the edge point 633). As such, the maximum pillarbox size is than the point 631 of the maximum disparity.

Hence, the boundary areas $B_L$, and $B_R$ are defined using the pillarbox areas.

In those examples, the locations of not only the points 621, 622. 631 and 632 defining other points but also the edge points 623 and 633 can be arbitrarily selected to the understanding. However, the exemplary embodiments are not limited to this specific implementation. That is, the definition of the points can be from the left-eye image or the right-eye image. As such, the maximum points of the disparity can take anywhere in the left-eye or right-eye image. For example, this also to the points 622 and 632 defining the pillarbox areas.

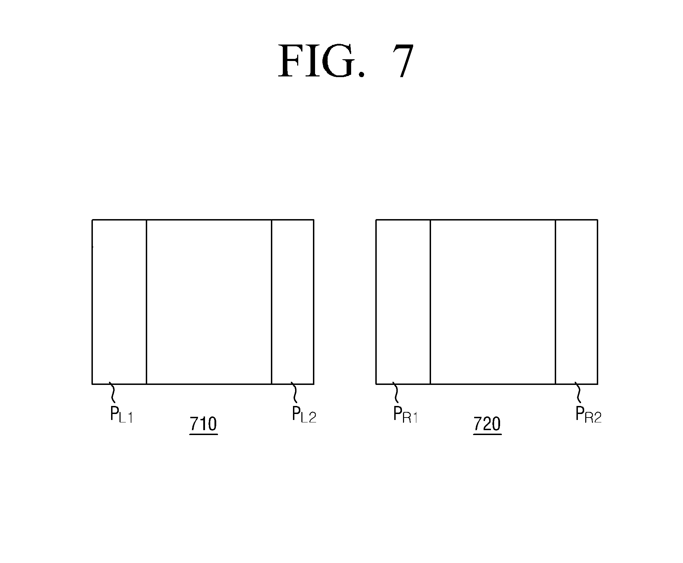

The pillarbox in the left-eye or right-eye area can differ from each other in size. FIG. 7 depicts a location of the disparity between pillarbox is left-eye image 710 and right-eye image 720. Herein, the left-eye and right-eye pillarboxes $^PR1$ and $^PR2$ in the right-eye image 720 and the left pillarbox $P_{L1}$, of the left-eye image 710 are than the right pillarbox $^{P}L2$ n size. To deal with this, Equation 2 can be re-expressed as Equation 4 to take into account the size of the individual pillarbox.

[Equation 4]

$$B_L = B_R = \begin{cases} Max(D), \text{if } Max(P_{L1}, P_{L2}, P_{R1}, P_{R2}) < Max(D) \\ Max(P_{L1}, P_{L2}, P_{R1}, P_{R2}), \text{otherwise} \end{cases}$$

When the distortion are determined in each image, the step for reducing the artifacts can be performed to reduce or eliminate the effect of the artifacts. The artifacts can be reduced or eliminated in various manners. For example, when the boundary areas are defined, source images can be cropped according to the size and the location of the boundary areas and the cropped images can be interpolated (for example, scaled) to maintain the size of the original image. The determined boundary areas can be used to effectively remove the black bars or the pillarboxes in the processed left-eye and right-eye images, and to crop part of the source images.

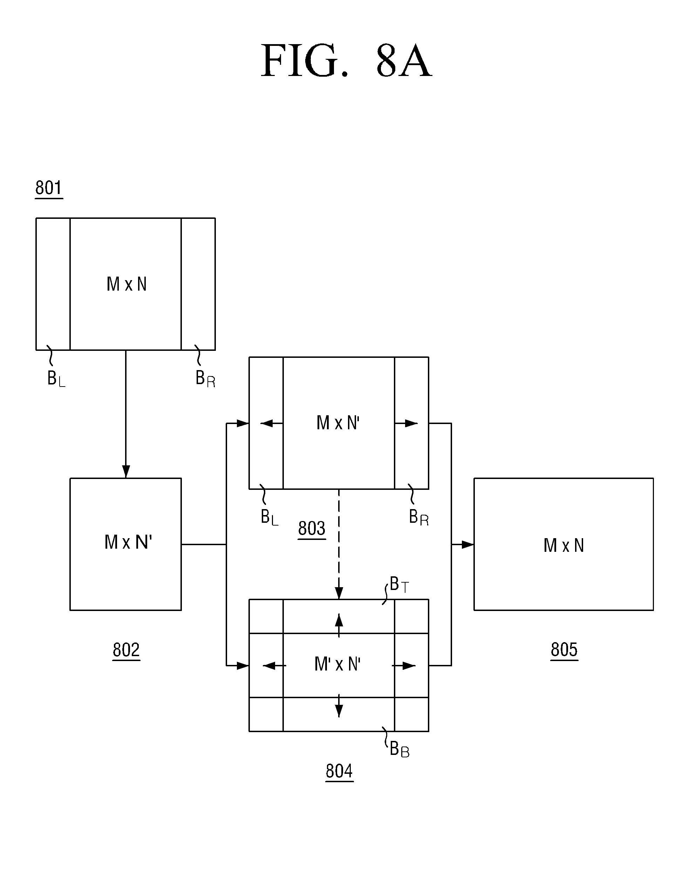

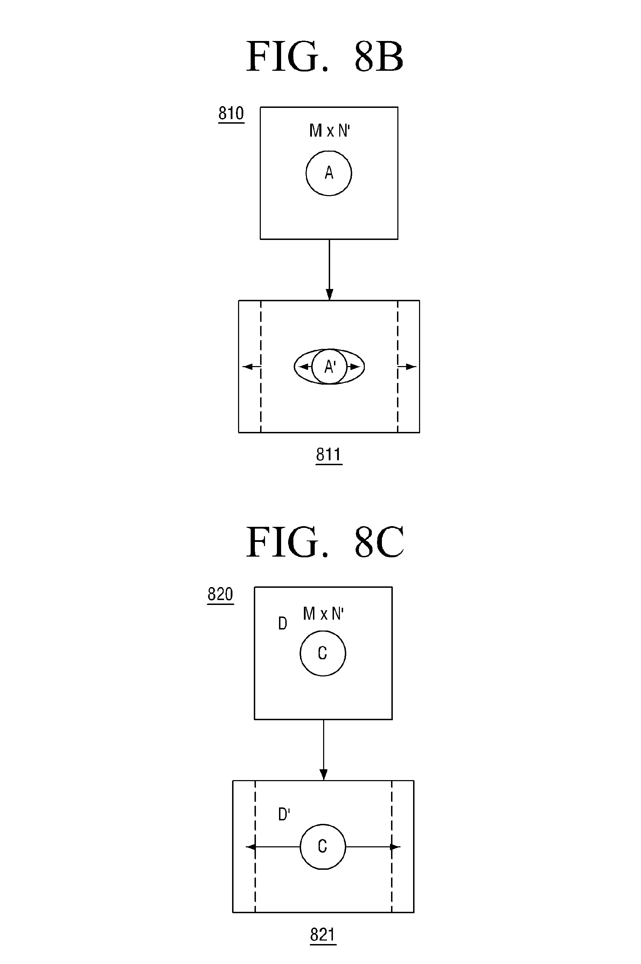

FIG. 8A depicts the image artifacts which are reduced or eliminated in the determined boundary areas through cropping and interpolation, An image 801 indicates a left-eye or right-eye 2D image including a left-eye boundary and a right-eye boundary $B_R$. However, it is possible to selectively determine whether the single boundary is determined for a single image like the left boundary area for the left-eye image and the right boundary area for the right-eye image, or whether the left and right boundaries are determined for the single image like the left-eye image includes the le and right boundary areas and the right-eye image includes the left and right boundary The image 801 in FIG. 8 is merely the single image like the left-eye or right-eye image, which includes both of the left and right boundaries, and can be determined using the aforementioned method.

As shown in FIG. 8A, the image including the left boundary $B_L$ and the right boundary $B_R$ has a size of $M \times N$. Herein, $M$ denotes rows and $N$ denotes columns. The left and right boundaries $B_L$ and $B_R$ are determined as the areas having the greatest disparity as explained above. Once the boundary area is determined, the number of the columns is decreased in the removal of $B_L$ and $B_R$. Thus, the left and right boundaries $B_L$ and $B_R$ can be removed in the image 802 of the $M \times N'$ size as shown in FIG. 8A. That is, $N' = N - B_L - B_R$,

Boundary areas $B_T$ and $B_B$ can be applied to the top and the bottom, respectively, of the image in the same manner. By removing the top and the bottom of the image, the image has a size of $M' \times N'$ Namely, $M' = M - B_T - B_B$. The resultant image 804 of the size $M' \times N'$ can be scaled in both the horizontal direction and the vertical direction. After being scaled in the horizontal direction and the vertical direction, a final image 805 has the same size M X N as the original image 801.

Arrows in the images 802 through 805 are used to indicate the horizontal scaling alone or the horizontal scaling and the vertical scaling at the same time. A dotted line between the image 803 and the image 804 indicates the horizontal scaling and the vertical scaling separated or concurrently performed.

The top boundary $B_T$ and the bottom boundary $B_B$ in FIG. 8A can be identified as the areas having the artifacts and can be removed to enhance the quality of the resultant 3D image. The top and bottom boundary areas can be distinguished in the similar manner to the le and right boundary are as explained above, In some the artifacts are removed or reduced only in the top and the bottom boundary. In this situation, the methods for determining the distortion parameters and distinguishing the boundary area are applicable to the top and bottom areas of the analyzed image.

The received contents may be letterboxed. In this case, the top and bottom boundary areas can be determined as explained above. Similar to the pillarboxes in FIG. 5, the sizes of the letterbox areas can be compared.

Alternatively, when the boundary areas are distinguished and removed, the remaining image can be scaled based on the actual contents. In some cases, when no object exists in the image, the scaled background can yield a better effect. For example, when the left and right boundary areas are removed and the result image is scaled merely in the horizontal direction, the object of interest in the image may be distorted or extended horizontal as shown in FIG. 8B.

In FIG. 8B, the image 810 represents the $M \times N'$ image (e.g., with $B_L$ and $B_R$ removed). An object A at the center of the image 810 is a complete circle. The image 810 is horizontally scaled to create an image 811. Thus, the resulting image 811 is extended horizontally. The shape of the object A is distorted to A' because of the horizontal scaling. Hence, a user cannot experience an image of high quality.

However, the horizontal scaling can be applied only to the background, and for example, may not be applied to the object of interest in the front view, such as object A in FIG. 8B. In FIG. 8C, the background D is in an image 820, whereas the object C is not scaled. Thus, an image 821 including the unchanged object C in the front view is generated, whereas the background D is extended to D'.

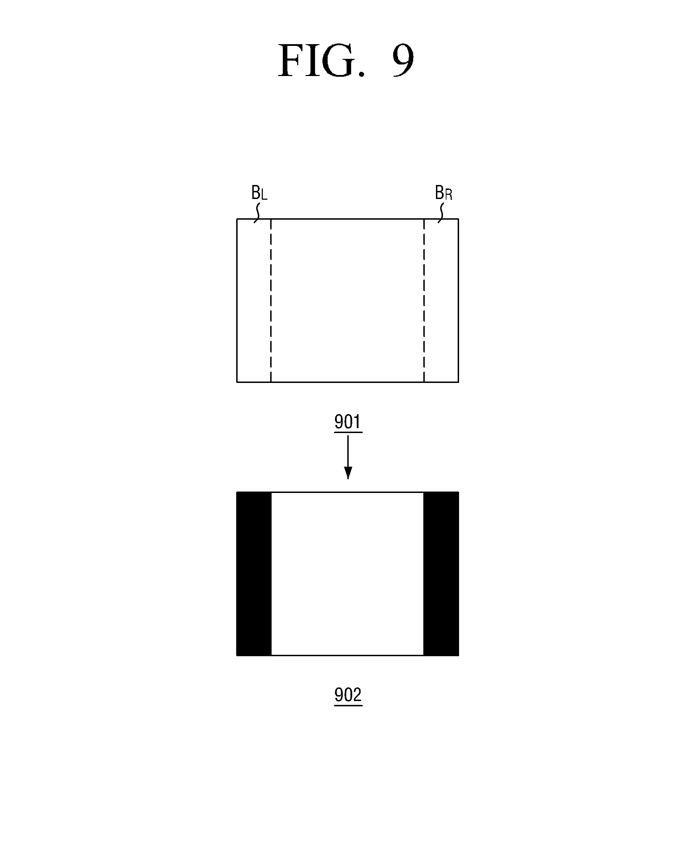

Contrary to the scaling, once the boundary areas are removed, black bars can be used to replace the identified boundary areas based on the determined distortion parameters. In this case, though the original left-eye and right-eye 2D images are not pillarboxed (and/or letterboxed), the resultant 3D image is pillarboxed (and/or letterboxed) as shown in FIG. 9.

As shown in FIG. 9, after the boundary areas $B_L$ and $B_R$ are distinguished in an image 901, pixels in the boundary areas are blackened and displayed in an image 902. Although it is not depicted in FIG. 9, this can be applied to the boundary areas (e.g., $B_T$ and $B_B$ in FIG. 8A) perceived substantially in the horizontal direction in the image.

The exemplary embodiments are not limited to black as the color for the black bar artifact reduction technique. Instead, the pixels in the identified boundary areas can be changed to another color, for example, to gray. The pixels in the identified boundary areas can be changed to a multiple color pattern, rather than the single-color pattern. For example, the pixels in the identified boundary areas can be changed to display in a polka-dot pattern or in a cross-shaped pattern. As such, the exemplary embodiments are not limited to the pattern of FIG. 9.

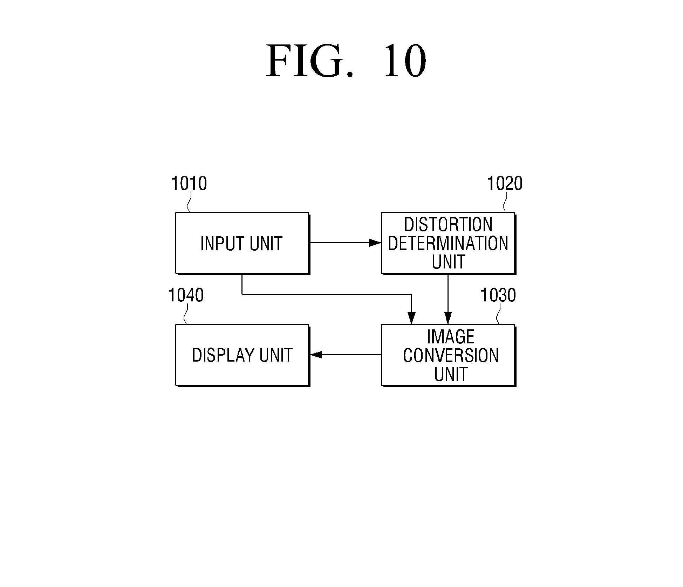

FIG. 10 is a block diagram of a 3D image display apparatus according to an exemplary embodiment.

Referring to FIG. 10, the 3D image display apparatus includes an input unit 1010, a distortion determination unit 1020; an image conversion unit 1030, and a display unit 1040.

The input unit 1010 receives the 2D or 3D image. Also, the input unit 1010 receives the left-eye image and the right-eye image.

The distortion determination unit 1020 determines at least one distortion parameter from the left-eye and right-eye images when the image received through the input unit 1010 is the 3D image including the left-eye image and the right-eye image.

The image conversion unit 1030 removes the first boundary part from the received left-eye image based on the at least one distortion parameter determined by the distortion determination unit 1020, and converts the received left-eye and right-eye images by eliminating the second boundary part from the received right-eye image.

The display unit 1040 alternately displays the converted left-eye and right-eye images.

When the image received through the input unit 1010 is the 2D image including at least one of the pillarbox or the letterbox, the image conversion unit 1030 removes the pillarbox areas or the letterbox areas and then generates the left-eye image and the right-eye image.

The distortion determination unit 1020 can determine the maximum disparity value between the received left-eye and right-eye images.

Herein, at least one distortion parameter includes the coordinates corresponding to the left part and the right part, the left part can be the left edge of the received left-eye image, and the right part can be the right edge of the received right-eye image.

In this case, the first and second boundary parts can be substantially in the vertical direction. A scaling unit (not shown) scales the left-eye and right-eye images converted by the image conversion unit 1030.

The scaling unit (not shown) can scale the left-eye and right-eye images converted by the image conversion unit 1030 according to a scaling ratio defined based on the at least one distortion parameter.

The image conversion unit 1030 can insert the black bars to the boundary areas removed in the left-eye and right-eye images.

Meanwhile, the left-eye and right-eye images can include at least one of the pillarbox and the letterbox.

In this the distortion determination unit 1020 can determine at least one of the size of the pillarbox area and the size of the letterbox area.

The distortion determination unit 1020 can determine the size of the pillarbox area, determine the maximum disparity value between the received left-eye and right-eye images, and determine the pillarbox areas as the first and second boundary areas when the size of the pillarbox areas is greater than the maximum disparity value.

Herein, the first boundary area can be substantially similar to at least one of the size, the shape, and the location of the second boundary area.

The received left-eye and right-eye images can include at least one of the pillarbox and the letterbox, and at least one distortion parameter can include first data relating to the different pixels by a preset value between the received left-eye and right-eye images, and second data relating to one or more internal pixels of the pillarboxes and the letterboxes.

The first and second boundary areas can be determined based on the comparison of the first data and the second data.

The foregoing exemplary embodiments and advantages are merely exemplary and are not to be construed as limiting the inventive concept. The present teaching can be readily applied to other types of apparatuses. Also, the description of the exemplary embodiments is intended to be illustrative, and not to limit the scope of the claims, and many alternatives, modifications, and variations will be apparent to those skilled in the art.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly otherwise, each feature disclosed is one example only of a generic series of equivalent or similar features. The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

**Claims**

1. An image display method comprising:

     receiving an image which comprises a left-eye image and a right-eye image,
     determining at least one distortion parameter from the left-eye image and the right-eye image; converting the received left-eye image and the received right-eye image by removing a first boundary part from the received left-eye image and removing a second boundary part from the received right-eye image based on the at least one determined distortion parameter; and
alternately displaying the converted left-eye image and the converted right-eye image.

2. The image display method of claim 1, further comprising:

if the received image is a 2D image comprising at least one of a pillarbox and a letterbox, removing the pillarbox or letterbox and generating a second left-eye image and a second right-eye image,

3. The image display method of claim 1 or claim 2, wherein the determining the at least one distortion parameter comprises:

determining a maximum disparity value between the received left-eye image and the received right-eye image.

4. The image display method of any one of claims 1 to 3, wherein the distortion parameter comprises coordinates corresponding to a left part and a right part,
wherein the left part is a left edge of the received left-eye image, and
wherein the right part is a right edge of the received right-eye image.

5. The image display method of any one of claims 1 to 4, wherein the first boundary part and the second boundary part is in a vertical direction.

6. The image display method of any one of claims 1 to 5, further comprising:

scaling the converted left-eye image and the converted right-eye image,

7. The image display method of claim 5, wherein the scaling is performed according to a scaling ratio defined based on the at least one distortion parameter.

8. The image display method of any one of claims 1 to 7, further comprising:

inserting black bars to areas corresponding to the boundary part removed in the left-eye image and the right-eye image.

9. The image display method of any one of claims 1 to 8, wherein the received left-eye image and the received right-eye image comprises at least one of a pillarbox and a letterbox.

10. The image display method of claim 9, wherein the determining the at least one distortion parameter comprises:

determining at least one of a size of the pillarbox area and a size of the letterbox area.

11. The image display method of claim 9, wherein the determining the at least one distortion parameter comprises:

determining a size of a pillarbox area;
determining a maximum disparity value between the received left-eye image and the received right-eye image; and
wherein if the size of the pillarbox area is greater than the maximum disparity value,
determining the pillarbox area as the first boundary part and the second boundary part.

12. The image display method of any one of claims 1 to 8, wherein the first boundary part is similar to at least one of a size, a shape, and a location of the second boundary part.

13. An image display apparatus comprising:

an input unit which receives an image comprising a left-eye image and a right-eye image;
a distortion determination unit which determines at least one distortion parameter from the left-eye image and the right-eye image;

an image conversion unit which converts the received left-eye image and the received right-eye image by removing a first boundary part from the received left-eye image and removing a second boundary part from the received right-eye image based on the at least one determined distortion parameter; and
a display unit which alternately displays the converted left-eye image and the converted right-eye image.

14. The image display apparatus of claims 13, wherein if the received image is a 2D image comprising at least one of a pillarbox and a letterbox, the image conversion unit removes the pillarbox or letterbox and then generates a second left-eye image and a second right-eye image.

15. The image display apparatus of claim 13, wherein the distortion determination unit determines a maximum disparity value between the received left-eye image and the received right-eye image.

# FIG. 1
## (PRIOR ART)

# FIG. 2

# FIG. 3

300

START

S301 — RECEIVE CONTENTS

S302 — 3D CONTENTS? — N → CONVERT 2D CONTENTS TO 3D CONTENTS — S303

Y

S304 — DETERMINE DISTORTION PARAMETERS

S305 — DETERMINE BOUNDARY AREAS

S306 — REDUCE ARTIFACTS

END

# FIG. 4A

B_L  404  401  402  403  B_R

# FIG. 4B

415  416  413

B_L1  414  401  B_L2  B_R2  402  B_R1

# FIG. 5

511　　　　　　　512　　　　521　　　　　　　522

$P_L$　　　　　　$P_L$　　　　$P_R$　　　　　　$P_R$

510　　　　　　　　　　　520

# FIG. 6A

# FIG. 6B

# FIG. 7

$P_{L1}$     710     $P_{L2}$       $P_{R1}$     720     $P_{R2}$

# FIG. 8A

801

M x N

$B_L$      $B_R$

M x N'

802

M x N'

$B_L$    803    $B_R$

$B_T$

M' x N'

$B_B$

804

M x N

805

# FIG. 8B

810

M x N'

A

811

# FIG. 8C

820

D    M x N'

C

D'

C

821

# FIG. 9

B$_L$     B$_R$

901

902

# FIG. 10

1010

1020

```
INPUT UNIT
```

```
DISTORTION
DETERMINATION
UNIT
```

1040

1030

```
DISPLAY UNIT
```

```
IMAGE
CONVERSION
UNIT
```

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020110019967